# EUROPEAN PATENT APPLICATION

(11) **EP 1 148 408 A2**
(43) Date of publication of application: **24.10.2001**
(21) Application number: 01303586.0
(22) Date of filing: 19.04.2001
(51) Int. Cl.: G06F 1/00

(54) **Information embedding apparatus and method**

(30) Priority: 21.04.2000 JP 2000120474; 02.06.2000 JP 2000165744; 28.03.2001 JP 2001092619
(71) Applicant: SONY CORPORATION, Tokyo 141 (JP)
(72) Inventor: Hirai, Jun, Shinagawa-ku, Tokyo (JP)
(74) Representative: DeVile, Jonathan Mark, Dr.

(57) **Abstract**

A digital watermark is embedded into content for implementing copyright protection. The content is then distributed over a first transmission channel. A digital watermark signal to be superimposed on the content is transmitted over an encrypted second transmission channel. When the digital watermark is required, it is superimposed on the content and is then transmitted via, for example, an analog connection terminal. Alternatively, the digital watermark is decrypted and is obtained over the second transmission channel. The digital watermark obtained via the first transmission channel is then subtracted from the content, thereby removing the digital watermark. It is impossible for a third party to extract the digital watermark transmitted via the second transmission channel in meaningful form, thereby protecting the content form illegal use.

## Description

The present invention relates to information embedding apparatus and methods of embedding information.

Copyright is a relatively exclusive right for using works, and is considered to be the so-called "intangible property". The "works" discussed in this specification mean any expression of creative thought and feeling, including the literature, research, art, or music. The copyright is protected by, for example, the copyright laws of the individual countries or international conventions, such as the "Berne Convention" or the "Universal Copyright Convention". For example, various media, such as digital text, computer programs, digital music content, video content, and broadcast program content, are considered to be works, and should be appropriately protected under the copyright laws.

It is very rare that works are used by their authors. Generally, other people are licensed to use the copyright and the authors obtain certain amounts in exchange for the use of the copyright. Thus, in order to secure the protection of the copyright, it is necessary to prevent the illegal use of works, for example, the copying of the works, without the author's permission.

The history of copyright protection originates from the invention of printing technology in the middle of the fifteenth century. Because of the remarkable progress of recent electrical and electronic technologies, it has become technically easy to make copies of works, and accordingly, the situation concerning copyright is currently changing. That is, high level digital signal processing techniques, data recording techniques, and data transmission techniques are developing, and recording/playback apparatuses and recording media used for the content are becoming smaller. Accordingly, high-level data processing performance can be implemented even in an inexpensive apparatus.

Conventionally, however, analog signal processing is mostly performed for creating and distributing the content, i.e., in the process of image-capturing, recording/playback, and transmitting of the content. Thus, an expensive and large apparatus is required, and recording media for the content are accordingly large and expensive. Even if someone steals and copies the content, it is not easy to play back the content, which makes the illegal use of the copyright almost impossible. However, along with highly advanced digital signal processing techniques, data recording techniques, and data transmission techniques, recording/playback apparatuses and recording media for the content are becoming smaller, and high-level data processing performance can be achieved even in inexpensive apparatuses. In other words, digital data or content can be easily copied or tampered with, thereby defenselessly exposing the data to the danger of copyright infringement. Therefore, tighter copyright laws and other laws are not sufficient. It is also necessary in terms of information technology to extend copyright protection by supporting the legal use or excluding the illegal use of works.

In the field of the digital signal processing, encryption methods are widely used, and more specifically, signals are encrypted before being transmitted, thereby protecting the signals from unauthorized third parties or illegal users. Such encryption methods are commonly used in pay broadcasting and digital recording media. The sender and the receiver of the signals have the same key, and the signals are modified, for example, scrambled, with the key. Accordingly, unauthorized users without the key are unable to use the signals. That is, the modified signals, for example, the scrambled signals, can be reconstructed into the original state only with the key of the authorized users, thereby making it possible for the legal users to obtain the original content.

According to the content protection method using the encryption technique, when monitoring or reading the encrypted content by a conventional playback apparatus, the encrypted content must be decrypted. Thus, the decrypted content is again exposed to the danger of illegal use. Additionally, the content can be transmitted over a transmission channel without the loss of quality. Generally, however, the final destination of the signals, i.e., the content, is a television receiver or a speaker, and thus, the content is mostly transmitted as analog signals. Analog scrambled signals are difficult to handle, and thus, descrambled (clear) signals are preferably used.

As a means for protecting the clear signals, a so-called "digital watermarking" or "data hiding" technique may be used. According to the digital watermark technique, information is embedded into images or music in an almost invisible or inaudible form (for example, see "Data hiding technique for supporting digital watermark" (vols. 1 and 2) (February 24, 1997 issue and March 10, 1997 issue of Nikkei Electronics)). The digital watermarking is implemented by inserting information different from the original information into part of a host signal by utilizing the statistical characteristics of the host signal. For example, copyright information may be embedded into the host signal by using a digital watermark. Then, when the content is received, the copyright information embedded as the digital watermark is extracted, thereby checking the distribution route of the data or the presence or the absence of the right of use.

For example, it may be arranged that content recording/copying apparatuses prohibit a recording operation in response to a digital watermark, thereby preventing illegal copying. Moreover, when a digital watermark is detected, the original source of the content can be found, which makes it possible to determine the integrity of the copied content.

In response to a demand for copyright protection, research and development on digital watermark techniques is vigorously being conducted, and it is possible to conceive various data embedding methods. It is also possible to embed a plurality of digital watermarks into the same content by using detection keys which can be independently read.

In this case, however, copyright information may be written into the same content, such as images, music, or broadcast programs, more than one time, while creating, editing, and distributing the content. In particular, when one work is created by more than one person, that is, a collaborative work or a combined work is created, not only the copyright, but also neighboring rights are generated during the process of creating and editing the content, which makes it necessary to write the copyright information many times.

However, digital watermarks should not be overwritten many times during signal processing (hereinafter "overwrite" means writing new data without replacing old data). Otherwise, the S/N ratio is reduced which impairs the quality of the original content, for example, the quality of the original images and sound.

In overwriting the digital watermarks, they have to be positioned orthogonal to each other, which would otherwise increase the error rate.

Additionally, once the digital watermarks are removed from the content, the content can be easily illegally copied or tampered with, thereby exposing the copyright holder or neighboring right holders to the danger of infringement.

Thus, in order to protect the content with digital watermarks while ensuring the convenience of secondary users of the content, it is necessary to safely transfer the digital watermark information between systems and to safely and tightly store and manage it.

Various aspects and features of the present invention are defined in the appended claims.

According to one aspect of the present invention, there is provided an information embedding apparatus for embedding additional information into a content as a digital watermark. The information embedding apparatus includes: (a) a generator for generating the digital watermark representing the additional information; (b) an embedding unit for embedding the digital watermark into the content; (c) a transmitter for transmitting the content provided with the embedded digital watermark; and (d) a transmitter for transmitting the digital watermark or information for reconstructing the digital watermark.

Embodiments of the present invention generally relate to digital watermark techniques for embedding information in content, such as images and music, in an almost invisible or inaudible form. More particularly, embodiments of the invention relate to a digital watermark technique for writing digital watermarks into the content during each process of creating, editing, or distributing various types of content, such as images, music, and broadcast programs in order to achieve copyright protection.

Embodiments of the present invention also pertain to a digital watermark technique for writing new digital watermarks during each process of creating, editing, or distributing the content, and more particularly, to a digital watermark technique for writing new digital watermarks without impairing the quality, such as the signal-to-noise (S/N) ratio, of the original content.

Accordingly, embodiments of the present invention can provide a digital watermark technique for suitably writing digital watermarks into content, such as images, music, and broadcast programs, during each process of creating, editing, or distributing the content for achieving copyright protection.

Embodiments of the present invention can also provide a digital watermark technique for writing new digital watermarks during each process of creating, editing, or distributing the content.

Embodiments of the present invention can also provide a digital watermark technique for writing new digital watermarks without the loss of quality, for example, S/N ratio, of the original content.

Embodiments of the present invention can also provide a digital watermark technique for achieving content protection while ensuring the convenience of secondary users of the content with digital watermarks.

According to another aspect of the present invention, there is provided an information embedding method for embedding additional information into a content as a digital watermark. The information embedding method includes: (a) a generating step of generating the digital watermark representing the additional information; (b) an embedding step of embedding the digital watermark into the content; (c) a transmitting step of transmitting the content provided with the embedded digital watermark; and (d) a transmitting step of transmitting the digital watermark or information for reconstructing the digital watermark.

In the aforementioned information embedding method, the generating step (a) may include a sub-step of generating a key pattern used for indicating the additional information as the digital watermark, and a sub-step of generating the digital watermark by using the key pattern. In this case, the transmitting step (d) may include a sub-step of transmitting the key pattern as the information for reconstructing the digital watermark.

The generating step (a) may include a sub-step of generating a key pattern used for indicating the additional information as the digital watermark, a sub-step of modulating the key pattern according to the complexity of the content, and a sub-step of generating the digital watermark by using the modulated key pattern. In this case, the transmitting step (d) may transmit the modulated key pattern as the information for reconstructing the digital watermark.

The transmitting steps (c) and (d) may be integrated and multiplex the content provided with the embedded digital watermark with the information for reconstructing the digital watermark. In this case, the multiplexed content may preferably be decrypted before being transmitted.

According to the above-described information embedding apparatus and method, the content provided with the embedded digital watermark is transmitted over a first transmission channel, and also, a digital watermark signal to be superimposed on the content is transmitted over an encrypted second transmission channel. When the digital watermark is required, it is superimposed on the content and is then transmitted via, for example, an analog connection terminal. Alternatively, the digital watermark is decrypted and is obtained over the second transmission channel, and also, the digital watermark signal obtained via the first transmission channel is subtracted from the content, thereby removing the digital watermark.

That is, a new digital watermark can be embedded by replacing the previous digital watermark, thereby preventing a deterioration in the original content, which is conventionally suffered by overwriting digital watermarks.

According to still another aspect of the present invention, there is provided an information processing apparatus for processing a content in which additional information is embedded as a digital watermark. The information processing apparatus includes: (a) an acquiring unit for acquiring the content provided with the embedded digital watermark; (b) an acquiring unit for acquiring the digital watermark or information for reconstructing the digital watermark; and (c) a removing unit for removing the digital watermark from the content by using the acquired digital watermark or the information for reconstructing the digital watermark.

According to a further aspect of the present invention, there is provided an information processing method for processing a content in which additional information is embedded as a digital watermark. The information processing method includes: (a) an acquiring step of acquiring the content provided with the embedded digital watermark; (b) an acquiring step of acquiring the digital watermark or information for reconstructing the digital watermark; and (c) a removing step of removing the digital watermark from the content by using the acquired digital watermark or the acquired information for reconstructing the digital watermark.

In the aforementioned information processing method, the content provided with the embedded digital watermark acquired in the acquiring step (a) may be encrypted. In this case, the information processing method may further include a decrypting step of decrypting the encrypted content.

In acquiring multiplexed data consisting of the content provided with the embedded digital watermark and the digital watermark or the information for reconstructing the digital watermark, the acquiring steps (a) and (b) may be integrated. In this case, the information processing method may further include a separating step of separating the multiplexed data into the content and the digital watermark or the information for reconstructing the digital watermark.

The acquiring step (b) may acquire, as the information for reconstructing the digital watermark, a key pattern used for indicating the additional information as the digital watermark. In this case, the removing step (c) may preferably include a sub-step of acquiring the additional information, a sub-step of generating the digital watermark by using the key pattern, and a sub-step of subtracting the digital watermark from the content.

The aforementioned information processing method may further include an embedding step of embedding another digital watermark into the content from which the previous digital watermark is removed by the removing step (c).

The aforementioned information processing method may further include an authentication processing step of performing predetermined authentication processing before the acquiring step (b) acquires the digital watermark or the information for reconstructing the digital watermark.

The digital watermark or the information for reconstructing the digital information acquired in the acquiring step (b) may be encrypted. In this case, the common key with the sender of the digital watermark information is obtained, and the removing step (c) may remove the digital watermark from the content after decrypting the digital watermark or the information for reconstructing the digital watermark.

The digital watermark or the information for reconstructing the digital watermark embedded into the content may be managed in correspondence with identification information unique to the content. In this case, the acquiring step (b) may acquire the digital watermark or the information for reconstructing the digital watermark based on the content identification information.

The information for reconstructing the digital watermark may include at least one of information indicating a basic pattern selected for embedding the digital watermark, modification information, and shifting information.

The acquiring step (b) may receive information indicating a modulation amount based on characteristics (temporal or spatial position) of the content as the information for reconstructing the digital watermark. In this case, the removing step (c) may reconstruct the digital watermark by encoding the additional information according to the information indicating the modulation amount so as to remove the digital watermark from the content.

According to the above-described information processing apparatus and method, the content provided with the embedded digital watermark is distributed over a first transmission channel, and also, a digital watermark signal to be superimposed on the content or information for reconstructing the digital watermark is transmitted via an encrypted second transmission channel. When the digital watermark is required, it is superimposed on the content and is transmitted via, for example, an analog connection terminal. Alternatively, the digital watermark or the information for reconstructing the digital watermark is decrypted and is obtained over the second transmission channel, and also, the digital watermark signal obtained via the first transmission channel is subtracted from the content, thereby removing the digital watermark.

That is, it is possible for a secondary user of the content to first remove the old digital watermark and to write a new digital watermark, thereby preventing a deterioration in the original content.

Additionally, the digital watermark or the information for reconstructing the digital watermark is encrypted in the second transmission channel. Thus, a third party cannot extract the digital watermark signal in meaningful form, thereby protecting the content from illegal use.

With this arrangement, a digital watermark can be embedded in various steps according to the intended purpose. Also, complicated embedding processing is largely performed in one step, and the content with the digital watermark can be downloaded via a network, thereby simplifying the overall system.

Additionally, embedding processing requiring a smaller load is performed in various steps, thereby saving the downloading time and the bandwidth.

According to a yet further aspect of the present invention, there is provided an information processing apparatus for managing digital watermark information to be embedded into a content. At least part of the digital watermark information is managed in correspondence with the content into which the digital watermark information is to be embedded.

According to a further aspect of the present invention, there is provided an information processing method for managing digital watermark information to be embedded into a content. At least part of the digital watermark information is managed in correspondence with the content into which the digital watermark information is to be embedded.

In the aforementioned information processing apparatus and method, at least part of the digital watermark information may be managed in encrypted form.

At least part of the digital watermark information may be managed in relation to the content into which the digital watermark information is to be embedded and to unique time information.

At least part of the corresponding digital watermark information may be supplied to an external device based on content identification information after authentication is performed with the external device.

The digital watermark information may be generated by modulating a basic pattern used for indicating information to be embedded as a digital watermark according to characteristics (temporal or spatial position) of the content and by encoding the information to be embedded according to an amount by which the basic pattern is modulated. Accordingly, the modulation amount may be managed as part of the digital watermark information.

Part of the digital watermark information may include at least one of information indicating a basic pattern selected for embedding the digital watermark, modulation information, and shifting information.

According to a further aspect of the present invention, there is provided a content processing apparatus for performing processing concerning embedding of digital watermark into a content. The content processing apparatus includes an embedding unit for embedding the digital watermark into the content and a removing unit for removing the digital watermark from the content. The embedding unit includes: (a) a generator for generating the digital watermark; (b) an embedding unit for embedding the digital watermark into the content; (c) a transmitter for transmitting the content provided with the embedded digital watermark; and (d) a transmitter for transmitting the digital watermark or information for reconstructing the digital watermark. The removing unit includes: (e) an acquiring unit for acquiring the content provided with the embedded digital watermark; (f) an acquiring unit for acquiring the digital watermark or the information for reconstructing the digital watermark; and (g) a removing unit for removing the digital watermark from the content by using the acquired digital watermark or the acquired information for reconstructing the digital watermark.

According to a further aspect of the present invention, there is provided a content processing method for performing processing concerning embedding of a digital watermark into a content. The content processing method includes an embedding step of embedding the digital watermark into the content, and a removing step of removing the digital watermark from the content. The embedding step includes: (a) a sub-step of generating the digital watermark; (b) a sub-step of embedding the digital watermark into the content; (c) a sub-step of transmitting the content provided with the embedded digital watermark; and (d) a sub-step of transmitting the digital watermark or information for reconstructing the digital watermark. The removing step includes: (e) a sub-step of acquiring the content provided with the embedded digital watermark; (f) a sub-step of acquiring the digital watermark or the information for reconstructing the digital watermark; and (g) a sub-step of removing the digital watermark from the content by using the acquired digital watermark or the acquired information for reconstructing the digital watermark.

The removing step may further include a sub-step of embedding a second digital watermark into the content from which the previous digital watermark is removed by the sub-step (g). The removing step may also include a sub-step of distributing the content into which the second digital watermark is embedded.

According to a further aspect of the present invention, there is provided a monitoring apparatus for managing additional information to be embedded into a content as a digital watermark. The monitoring apparatus includes: (a) a unit for issuing and supplying the additional information in response to a registration request of the content, and for managing the additional information in correspondence with the content; and (b) a unit for supplying the corresponding additional information of the content in response to a rewriting request of the additional information.

According to a further aspect of the present invention, there is provided a monitoring method for managing additional information to be embedded into a content as a digital watermark. The monitoring method includes: (a) a step of issuing and supplying the additional information in response to a registration request of the content, and of managing the additional information in correspondence with the content; and (b) a step of supplying the corresponding additional information of the content in response to a rewriting request of the additional information.

The aforementioned monitoring method may further include a step of acquiring the digital watermark representing the additional information or information for reconstructing the digital watermark. In this case, the step (b) may supply the digital watermark or the information for reconstructing the digital watermark in response to the rewriting request of the additional information.

According to a further aspect of the present invention, there is provided a storage medium for physically storing a computer-readable software program which executes, on a computer system, processing for embedding additional information into a content as a digital watermark. The computer-readable software program includes: (a) a step of generating the digital watermark representing the additional information; (b) a step of embedding the digital watermark into the content; (c) a step of transmitting the content provided with the embedded digital watermark; and (d) a step of transmitting the digital watermark or information for reconstructing the digital watermark.

According to a further aspect of the present invention, there is provided a storage medium for physically storing a computer-readable software program which executes, on a computer system, processing on a content into which additional information is embedded as a digital watermark. The computer-readable software program includes: (a) a step of acquiring the content provided with the embedded digital watermark; (b) a step of acquiring the digital watermark or information for reconstructing the digital watermark; and (c) a step of removing the digital watermark from the content by using the acquired digital watermark or the acquired information for reconstructing the digital watermark.

According to a further aspect of the present invention, there is provided a storage medium for physically storing a computer-readable software program which executes management of digital watermark information to be embedded into a content on a computer system. The computer-readable software program includes a step of managing at least part of the digital watermark information in correspondence with the content into which the digital watermark information is to be embedded.

According to a further aspect of the present invention, there is provided a storage medium for physically storing a computer-readable software program which executes processing concerning embedding of a digital watermark into a content on a computer system. The computer-readable software program includes: an embedding step of embedding the digital watermark into the content and a removing step of removing the digital watermark from the content. The embedding step includes: (a) a sub-step of generating the digital watermark; (b) a sub-step of embedding the digital watermark into the content; (c) a sub-step of transmitting the content provided with the embedded digital watermark; and (d) a sub-step of transmitting the digital watermark or information for reconstructing the digital watermark. The removing step includes: (e) a sub-step of acquiring the content provided with the embedded digital watermark; (f) a sub-step of acquiring the digital watermark or the information for reconstructing the digital watermark; and (g) a sub-step of removing the digital watermark from the content by using the acquired digital watermark or the acquired information for reconstructing the digital watermark.

According to a further aspect of the present invention, there is provided a storage medium for physically storing a computer-readable software program which executes monitoring processing for managing additional information to be embedded into a content as a digital watermark on a computer system. The computer-readable software program includes: (a) a step of issuing and supplying the additional information in response to a registration request of the content, and of managing the additional information in correspondence with the content; and (b) a step of supplying the corresponding additional information of the content in response to a rewriting request of the additional information.

The above-described recording media provide computer readable software programs to general-purpose computer systems for executing various program codes. Such media are portable and detachable storage media, such as compact discs (CDs), floppy disks (FDs), and magneto-optical discs (MOs). Alternatively, it is technically possible to provide the above-described computer-readable software programs to specific computer systems via transmission media, such as networks (by radio or cable).

In the above-described recording media, the structural or functional relationships between predetermined computer software programs and the recording media are defined so as to fulfil the functions of the computer software programs on a computer system. In other words, by installing the predetermined computer software programs on a computer system via the recording media of the present invention, the cooperative functions can be exerted on the computer system, thereby achieving operations and advantages similar to those obtained by the apparatuses and methods of the present invention.

Further objects, features and advantages of the present invention will become apparent from the following description of the preferred embodiments with reference to the attached drawings.

The invention will now be described by way of example with reference to the accompanying drawings, throughout which like parts are referred to by like references, and in which:
Fig. 1 is a functional block diagram illustrating the configuration of a data processing system according to a first embodiment of the present invention;
Fig. 2 is a flow chart illustrating a process for inserting and rewriting a digital watermark in the data processing system shown in Fig. 1;
Figs. 3A through 3D illustrate a technique for embedding digital watermark information into a frame which is formed by the interlace method in which one frame is formed according to two vertical scanning operations;
Fig. 4 schematically illustrates the configuration of a data processing system, which is a modification made to the data processing system shown in Fig. 1;
Fig. 5 is a functional block diagram illustrating the configuration of a data processing system according to a second embodiment of the present invention;
Fig. 6 schematically illustrates the configuration of a data processing system, which is a modification made to the data processing system shown in Fig. 5; and
Fig. 7 is a flow chart illustrating a process for inserting and rewriting a digital watermark in the data processing system shown in Fig. 5.

The present invention is described in detail below with reference to the accompanying drawings through illustration of preferred embodiments.

### First Embodiment

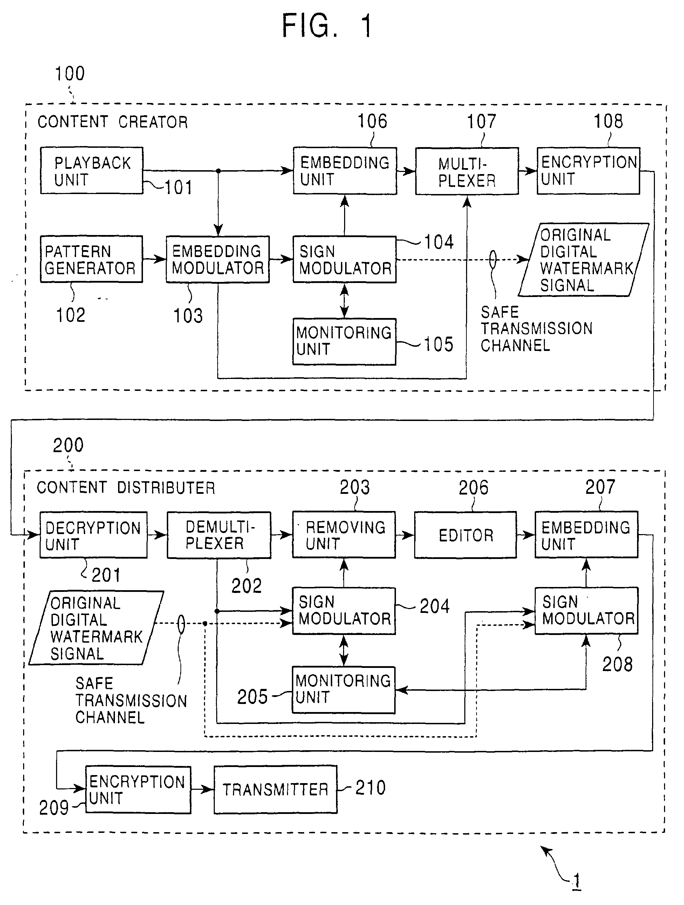

Fig. 1 is a schematic diagram illustrating a data processing system 1 according to a first embodiment of the present invention. The data processing system 1 is disposed in a company which creates, edits, and distributes content, such as images, music, and programs. For example, the data processing system 1 is arranged to link a broadcast content creator and a broadcast company. The data processing system 1 is able to write digital watermark information as required.

The data processing system 1 is formed of, as shown in Fig. 1, a content creator 100 which mainly conducts the creation of the content, and a content distributor 200 which mainly distributes the created content via, for example, broadcasting or other types of transmission.

The content creator 100 is formed of a playback unit 101, a pattern generator 102, an embedding modulator 103, a sign modulator 104, a monitoring unit 105, an embedding unit 106, a multiplexer 107, and an encryption unit 108.

The playback unit 101 is, for example, a video cassette recorder (VCR) or a disk recorder, and plays back the content, such as a work of a copyright holder, from a recording medium.

The pattern generator 102 generates a pattern, which is equivalent to a "digital watermark key". Generally, the pattern is expressed by two-dimensional information. An example of the key pattern is as follows.

It is now assumed that digital watermark information is embedded into a frame which is created by the interlace method for forming one frame by performing two consecutive vertical scanning operations. The most significant bit (MSB) "P1" is indicated by, for example, the upper half pixel region of an even-numbered field, and the subsequent bit "P2" is represented by the lower half pixel region of the even-numbered field. Similarly, the third bit "P3" is indicated by the upper half pixel region of an odd-numbered field, and the fourth bit "P4" is designated by the lower half pixel region of the odd-numbered field. Accordingly, four-bit digital watermark information iw (=P1|P2|P3|P4) can be embedded into one frame.

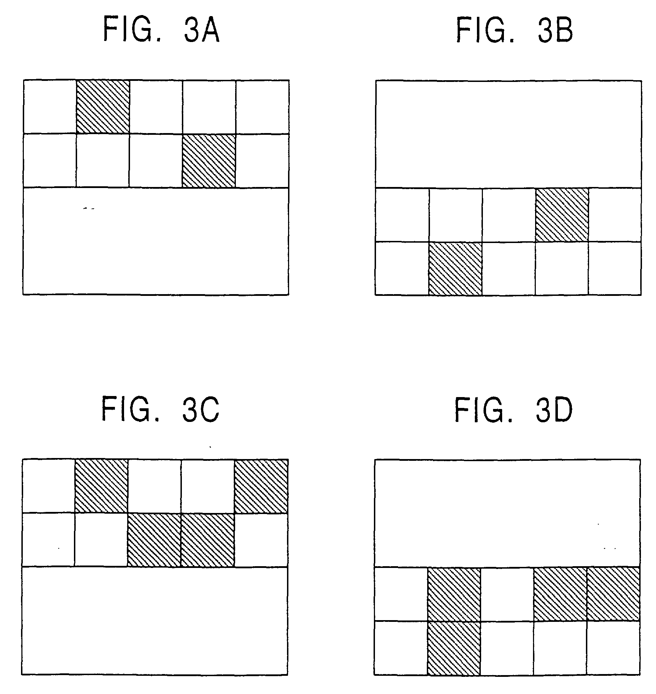

Figs. 3A through 3D illustrate a two-dimensional information pattern in which bit 1 is represented by each of the upper half and the lower half pixel regions of the even-numbered field and by each of the upper half and the lower half pixel regions of the odd-numbered field. If bit 0 is to be indicated rather than bit 1 in each pixel region, the pixels are simply inverted (i.e., positively and negatively inverted).

In the example shown in Fig. 3, the four-bit digital watermark information iw is embedded into one frame. However, the even-numbered and odd-numbered fields may be divided into smaller units, thereby making it possible to embed more bits of digital watermark information into one frame. Alternatively, two or more frames may be used to embed more bits of digital watermark information.

The embedding modulator 103 modulates the pattern to suitably embed digital watermark information iw represented by the pattern shown in Fig. 3 into a host signal (video signal). For example, the embedding modulator 103 first analyzes the complexity of the signal read by the playback unit 101, and then modulates the pattern so that a larger amount of digital watermark information can be embedded into a signal component on which the visual or audible masking effect (a larger amplitude signal makes a smaller amplitude signal invisible or inaudible) can be most effectively exerted. For example, a larger amount of digital watermark information embedded into a high frequency signal component becomes invisible (inaudible). A larger amount of digital watermark information embedded into a signal component which sharply fluctuates over time becomes invisible (inaudible).

A monitoring unit 105 centrally manages the digital watermark information iw to be embedded into the content for the copyright protection. The monitoring unit 105 may be the same entity as the content creator 100 or an external, independent (neutral or fair) entity. When embedding digital watermark information into the content, the content creator 100 makes a request to the monitoring unit 105. In response to the request, the monitoring unit 105 issues insertion code info, and supplies it to the sign modulator 104 and also registers it therein.

Upon receiving the insertion code info, the sign modulator 104 encodes it based on the embedding modulation signal (original digital watermark signal) output from the embedding modulator 103, thereby generating digital watermark information iw to be embedded.

The embedding unit 106 combines the playback signal from the playback unit 101 and the encoded digital watermark information iw (synthesis processing), thereby creating the content with the embedded digital watermark.

Then, upon receiving the content from the embedding unit 106 and the original digital watermark signal from the embedding modulator 103, the multiplexer 107 multiplexes the two signals. The original digital watermark signal corresponds to the embedding modulation signal before being encoded by the sign modulator 104, and is also equal to the key pattern information (shown in Fig. 3) for generating the digital watermark information iw. In other words, the digital watermark itself can be reconstructed from the original digital watermark signal.

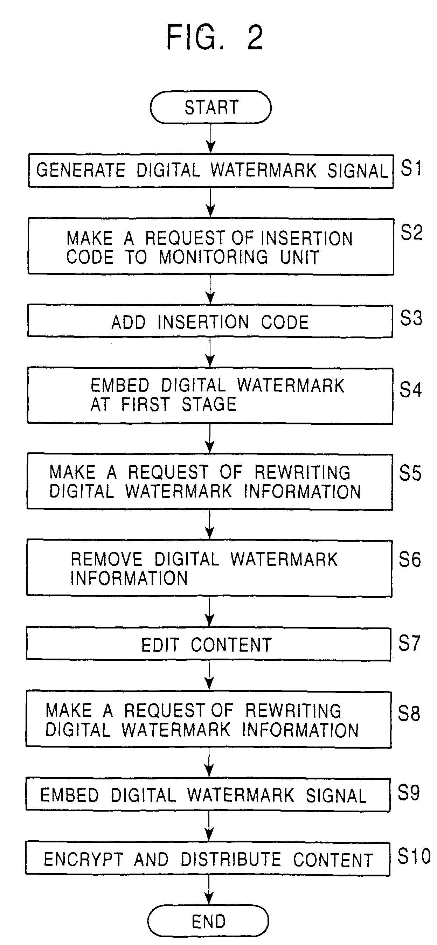

The encryption unit 108 encrypts the content having the embedded digital watermark information iw, and outputs the encrypted content from the content creator 100 (to the content distributor 200 in Fig. 2). It is assumed that the encrypted content is not decryptable by a third party without the encryption key. It should be noted that, however, the method for encrypting the content is not a limitation for implementing the present invention.

It is not essential that the digital watermark content be multiplexed with the original digital watermark signal in the multiplexer 107. If it is possible to safely send the original digital watermark signal by using a different transmission channel from the transmission channel used for sending the digital watermark content (or separately from the content if the same transmission channel is used), it is not necessary that the original digital watermark signal be sent together with the content. In this case, it is not necessary to provide the multiplexer 107.

It is to be understood that the processing executed by the content creator 100 is performed by a copyright holder, such as a content creator or related parties.

The content distributor 200 is formed of a decryption unit 201, a demultiplexer 202, a removing unit 203, a sign modulator 204, a monitoring unit 205, an editor 206, an embedding unit 207, a sign modulator 208, an encryption unit 209, and a transmitter 210.

The decryption unit 201 legally acquires the encryption key from the content creator 100, for example, a copyright holder, and decrypts the content. The content distributor 200 may be a broadcast company for broadcasting the created content by terrestrial broadcast or by satellite broadcast. It is now assumed that the broadcast company obtains the encryption key by settling a licensing agreement with the content creator.

Then, the demultiplexer 202 separates the digital watermark content from the original digital watermark signal. However, if the original digital watermark signal is transmitted separately from the content via a safe transmission channel without being multiplexed with the content in the content creator 100, the demultiplexer 202 does not perform the separation operation, or the demultiplexer 202 itself can be omitted.

The monitoring unit 205 centrally manages the insertion code info to be embedded into the content for the copyright protection. The monitoring unit 205 may be the same entity as the monitoring unit 105, or may be an external, independent (neutral or fair) entity.

When it is desired that the digital watermark embedded into the content be removed, the content distributor 200 makes a request to the monitoring unit 205. In response to this request, the monitoring unit 205 supplies the sign code info to the sign modulator 204 of the content distributor 200. The monitoring unit 205 also issues insertion code info' to be used by the content distributor 200 and also registers it therein, which is discussed in detail below.

The sign modulator 204 receives the current insertion code info from the monitoring unit 205 and encodes it with the original digital watermark signal so as to generate the digital watermark information iw which should be the same as the digital watermark information iw embedded into the content.

The removing unit 203 subtracts the digital watermark information iw from the digital watermark content output from the demultiplexer 202. Then, the digital watermark information iw is removed from the content.

If it is identified where the digital watermark information is embedded in the content, i.e., when the signal components have been embedded, as indicated by the pattern shown in Fig. 3 in which one bit is embedded into each of the upper and lower pixel regions of the even-numbered field and each of the upper and lower pixel regions of the odd-numbered field, the removing unit 203 is able to precisely remove the digital watermark iw in synchronization with the signal timing.

As a result of the removing operation performed by the removing unit 203, the original content is reconstructed in the content distributor 200. If the third party obtains the original content, the copyright of the copyright holder, i.e., the content creator, and the profit model of the use of the content may be exposed to the danger of copyright infringement. In this embodiment, however, the monitoring unit 205 supplies the information concerning the digital watermark, such as the insertion code info, only to the sign modulator 204 of the legal contractor, i.e., the content distributor 200. It is thus possible to protect the content from illegal users who may attempt to remove the digital watermark.

Then, the editor 206 of the content distributor 200 is able to edit the plaintext content without the digital watermark. If the content distributor 200 is a broadcast company for editing and distributing the broadcast content, it edits the content according to a predetermined broadcast program schedule.

The content edited by the editor 206 may be a secondary work of the original content, a collective work, a collaborate work, or a combined work formed of a combination of a plurality of contents. In this case, a different copyright from the original content is generated, and thus, new copyright information, i.e., new digital watermark information, must be written into the content.

When it is desired that digital watermark information be rewritten by new information, the content distributor 200 makes a request to the monitoring unit 205. In response to this request, the monitoring unit 205 issues the new insertion code info', and supplies it to the sign modulator 208 and also registers it in correspondence with the content identification information.

Upon receiving the insertion code info' from the monitoring unit 205, the sign modulator 208 encodes it with the original digital watermark signal supplied from the demultiplexer 202 so as to generate the digital watermark information iw' to be embedded into the content.

The embedding unit 207 then combines the edited content from the editor 206 and the encoded digital watermark information (synthesis processing), thereby writing the new digital watermark information.

Subsequently, the encryption unit 209 encrypts the digital watermark content, and the transmitter 210 outputs the content from the content distributor 200. The method for distributing the content is not particularly restricted, and the content may be distributed via terrestrial or satellite broadcasting, or by broadcast, multicast, push, or pull transmission via a wide area network, such as the Internet.

In this embodiment, the previous digital watermark is first removed from the content, and then, a new digital watermark is written. Accordingly, the quality of the original content is not deteriorated.

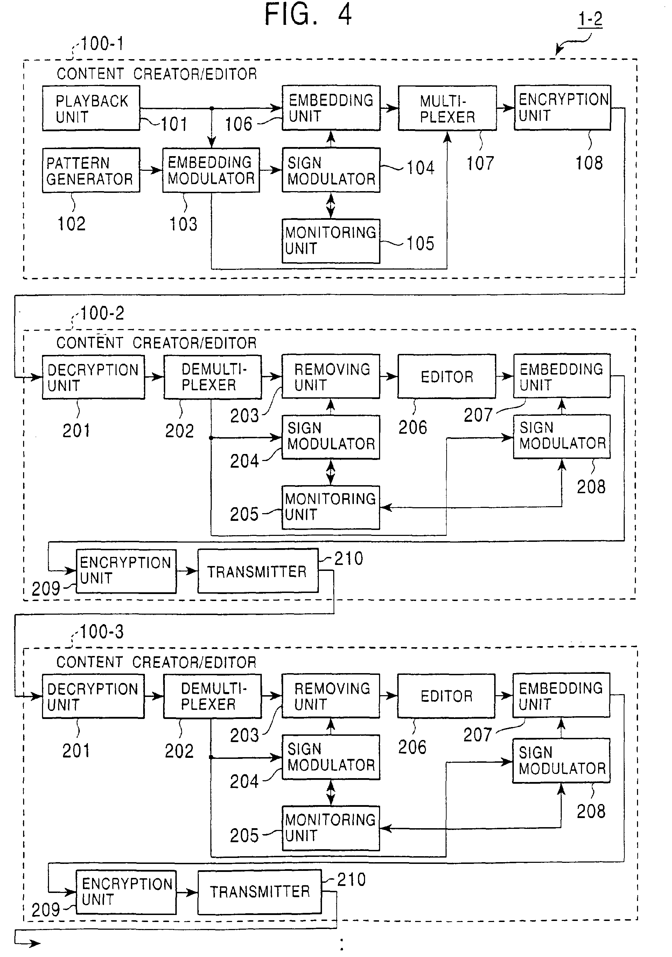

In the data processing system 1 shown in Fig. 1, only one content creator 100 and one content distributor 200 are provided. However, the present invention is not restricted to this arrangement. For example, a plurality of content creators/editors 100-1, 100-2, 100-3, and so on, may be provided for a data processing system 1-2, as shown in Fig. 4. In this case, when a new digital watermark is written in the second and the subsequent content creators/editors, the previous digital watermark is removed, and then, a new digital watermark is written into the content. Accordingly, the digital watermark can be safely rewritten by repeating the editing operations without deteriorating the quality of the original content.

The process for inserting and rewriting digital watermarks by the data processing system 1 is described below.

Fig. 2 is a flow chart illustrating the process for inserting and rewriting digital watermarks. It is assumed that the content creator 100 is connected to the monitoring unit 105, the content creator 100 is connected to the content distributor 200, and the content distributor 200 is connected to the monitoring unit 205, via safe transmission/communication channels, so as to block the invasion or interception of the third party. The processing for inserting and rewriting digital watermarks is discussed below with reference to the flow chart of Fig. 2.

In step S1, the content creator 100 creates a digital watermark signal according to the content.

Generally, adjustments are made to the signal components of a digital watermark according to the complexity of the signal so that the visual masking effect for the image content or the audio masking effect for the audio content can be most effectively exerted. For example, a larger amount of digital watermark information can be embedded into a higher frequency signal component, and a larger amount of digital watermark information can be embedded into a signal component which sharply fluctuates over time.

It is now assumed that a digital watermark is inserted into a video signal created by the interlace method for forming one frame by performing two vertical scanning operations. In this case, the MSB bit "P1" is indicated by the upper half pixel region of the even-numbered field, and the subsequent bit "P2" is represented by the lower half pixel region of the even-numbered field. Likewise, the third bit "P3" is indicated by the upper half pixel region of the odd-numbered field, and the fourth bit "P4" is represented by the lower half pixel region of the odd-numbered field. As a result, four-bit digital watermark information iw (=P1|P2|P3|P4) can be embedded into one frame.

Then, in step S2, the content creator 100 communicates with the monitoring unit 105 so as to request the monitoring unit 105 to send the unique insertion code info (in this embodiment, four bits) for identifying the content (or copyright). Then, the insertion code info is registered in the monitoring unit 105. In order to prevent posing or tampering of data, communications and procedures between the content creator 100 and the monitoring unit 105 are preferably performed by using encryption, digital certificates, or authentication.

In step S3, the digital watermark signal generated in step S1 is selected or modulated according to the insertion code, and the insertion code is added to the signal. In the example shown in Fig. 1, the positive and negative signs of the signal are determined by the insertion code info.

Then, in step S4, the digital watermark iw with the insertion code info is embedded into the content. This is a first embedding step of the digital watermark. When being embedded, the digital watermark iw is encrypted at the same time, and a certain header is added to the digital watermark iw and is transmitted with the content. Alternatively, the original digital watermark signal is multiplexed with the digital watermark content, and is then sent.

The processing in steps S1 through S3 is performed in the content creator 100, i.e., a copyright holder. If the content is stolen or illegally copied at step S1, S2, or S3, the digital watermark embedded in the content is detected, thereby specifying the creator (or legal copyright holder). The content may be encrypted to technically prevent illegal copying of the content more reliably.

By making a contract with the content creator 100 concerning the use of the content, i.e., the use of the copyright, the content distributor 200, such as a broadcast company, is allowed to legally use the content, and is provided with an encryption key for decrypting the content. It should be noted that a digital watermark is embedded in the content sent from the content creator 100.

It is now assumed that the content distributor 200 performs the editing operation on the content. More specifically, in step S5, the content distributor 200 creates a secondary work from the original content, a collective work, a collaborate work, or a combined work, formed of a combination of a plurality of contents. As a result, different copyright information from that for the original content, i.e., code info', must be inserted into the content.

In this case, the content distributor 200 makes a request to the monitoring unit 205 to rewrite the insertion code.

In response to the request, the monitoring unit 205 returns the current insertion code info, the digital watermark iw, or information required for generating the digital watermark (for example, the original digital watermark signal) to the content distributor 200, which enables the content distributor 200 to remove the digital watermark. In order to prevent posing or tampering of the data, communications and procedures between the content distributor 200 and the monitoring unit 205 are preferably performed by using encryption, digital certificates, or authentication.

Then, in step S6, the content distributor 200 subtracts the digital watermark iw from the content. Thus, the digital watermark iw is removed. If, however, the content is encrypted, it must be decrypted before being removed.

In step S7, the content distributor 200 is now able to edit the original content. After the editing operation, a secondary work of the original content, a collective work, a collaborate work, or a combined work formed of a combination of a plurality of contents is created, and different copyright information from that for the original content is generated accordingly.

Subsequently, in step S8, the content distributor 200 requests the monitoring unit 205 to rewrite the digital watermark and to register it, and receives the insertion code info' for identifying a new copyright (or identifying the content distributor 200 itself) from the monitoring unit 205.

At this stage, the content distributor 200 may create a new digital watermark signal. If the content distributor 200 distributes the content via a pay broadcast, it will become necessary to rewrite the digital watermark at a later stage. In this case, if illegal actions can be monitored by the monitoring unit 205, the digital watermark iw' and the digital watermark signal created by the content distributor 200 may be sent together.

Then, in step S9, the content distributor 200 embeds the digital watermark signal iw' with the insertion code info' into the content edited by the editor 206.

In step S10, the content distributor 200 then encrypts the edited content with the digital watermark if necessary, and distributes the edited content from the content distributor 200.

The content distribution method is not particularly restricted, and the content may be distributed via terrestrial or satellite broadcasting, or by broadcast, multicast, push, or pull transmission via a wide area network, such as the Internet.

The position, the field, and the time at which the digital watermark is to be embedded may be reserved in the content or the signal in advance. Then, the digital watermark may be embedded according to the reserved position, field, and time as required. In this case, without reserving the position, field, and time, only information indicating available space may be transmitted with the digital watermark.

In embedding the digital watermarks in the content or the signal, watermarks, which are not related to each other, are sometimes overwritten without erasing the previous watermarks. In this case, a technique of rewriting digital watermarks by erasing the previous watermark as in the present invention and a conventional technique of overwriting digital watermarks without erasing the previous watermark may be combined.

Additionally, if a large amount of digital watermarks are embedded, the quality of the content, such as the image or sound quality, is deteriorated according to the conventional transmission method (for example, analog transmission method). According to a new transmission method (for example, digital transmission method), however, the image or sound quality is improved by subtracting (removing) the digital watermarks, thereby encouraging the users to switch to the new transmission method.

### Second Embodiment

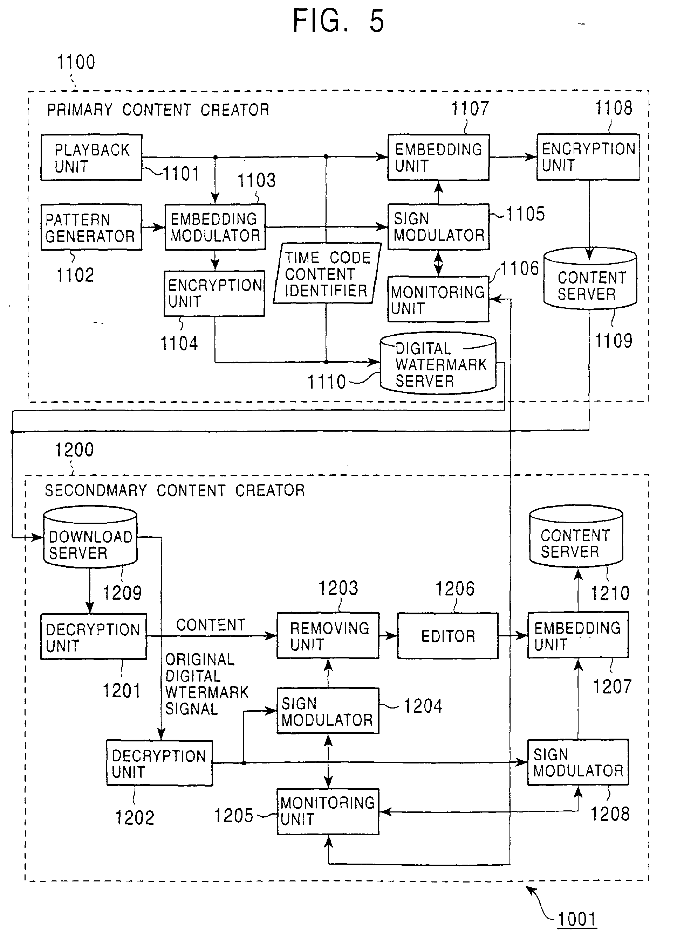

Fig. 5 is a schematic diagram illustrating a data processing system 1001 according to a second embodiment of the present invention. The data processing system 1001 may be disposed in a company which creates, edits, and distributes the content, such as images, music, programs. The data processing system 1001 may be disposed to link a broadcast content creator and a broadcast company. The data processing system 1001 is able to write digital watermark into the content as required.

The data processing system 1001 is formed of, as shown in Fig. 5, a primary content creator 1100 for creating the primary content, such as a movie, and a secondary content creator 1200 for creating the secondary content, such as edited or processed content from the primary content.

The primary content creator 1100 embeds a digital watermark into the content so that the source of the content can be identified in case the content is illegally copied within a studio while, for example, a movie is created. In contrast, in order to use (for example, broadcast) the content obtained from the primary content creator 1100, the secondary content creator 1200 removes the digital watermark embedded by the primary content creator 1100, and embeds a new digital watermark representing an identifier of a broadcast station or a time (broadcast time) identifier.

The primary content creator 1100 is formed of a playback unit 1101, a pattern generator 1102, an embedding modulator 1103, an encryption unit 1104, a sign modulator 1105, a monitoring unit 1106, an embedding unit 1107, an encryption unit 1108, a content server 1109, and a digital watermark server 1110.

The playback unit 1101 is, for example, a VCR or a disk recorder, and plays back the content, such as the works of copyright holders, from recording media.

The pattern generator 1102 generates a pattern (basic pattern or original digital watermark signal), which is equivalent to a "digital watermark key". Generally, the pattern is expressed by two-dimensional information. The pattern generator 1102 selects a pattern which is less visible on the screen while observing the signal output from the playback unit 1101. The selected pattern information forms part of the digital watermark information.

The embedding modulator 1103 modulates the pattern generated by the pattern generator 1102 for suitably embedding digital watermark information iw represented by the pattern into a host signal (video signal). For example, the embedding modulator 1103 first analyzes the complexity of the signal read by the playback unit 1101, and then modulates the pattern so that a larger amount of digital watermark information can be embedded into a signal component to which the visual or audible masking effect can be most effectively exerted. For example, a larger amount of digital watermark can be embedded according to a higher frequency component of the host signal. The digital watermark can also be embedded into the host signal according to the luminance value. The modulation information forms part of the digital watermark information.

The modulation signal is then encrypted in the encryption unit 1104, and is stored in the digital watermark server 1110 in correspondence with time code.

The content identifier is also encrypted and stored in the digital watermark server 1110. The content stored in a recording medium is encrypted, though it is not shown, and it is decrypted in the primary content creator 1100.

The monitoring unit 1106 centrally manages the digital watermark information iw to be embedded into the content for implementing the copyright protection. The monitoring unit 1106 may be the same entity as the primary content creator 1110, or an external, independent (neutral and fair) entity. When it is desired that the digital watermark be embedded into the content, the primary content creator 1100 makes a request to the monitoring unit 1106. In response to the request, the monitoring unit 1106 supplies the insertion code info to the sign modulator 1105, and also registers it in correspondence with the content.

The monitoring unit 1106 has settled a contract concerning the copyright protection with the primary content creator 1100, and also operates in association with the monitoring unit 1205 of the secondary content creator 1200. Alternatively, only a single monitoring unit may be provided.

The insertion code info issued by the monitoring unit 1106 is input into the sign modulator 1105. The sign modulator 1105 then encodes the insertion code info based on the embedding modulation information supplied from the embedding modulator 1103, thereby generating the digital watermark information iw.

The embedding unit 1107 combines the playback signal from the playback unit 1101 and the encoded digital watermark information iw (synthesis processing), thereby generating a host signal with the embedded digital watermark.

The host signal with the digital watermark, i.e., the content, is encrypted in the encryption unit 1108, and is temporarily stored in the content server 1109.

It is to be understood that the processing executed in the primary content creator 1100 is performed by the copyright holder or related parties, such as a movie creator.

The secondary content creator 1200 is formed of decryption units 1201 and 1202, a removing unit 1203, a sign modulator 1204, a monitoring unit 1205, an editor 1206, an embedding unit 1207, a sign modulator 1208, a download server 1209, and a content server 1210.

The download server 1209 is connected to the content server 1109 and the digital watermark server 1110 of the primary content creator 1100 via a network. The encrypted content with the digital watermark, the digital watermark information, and the associated information (such as encryption modulation information) stored in the content server 1109 and the digital watermark server 1110 are downloaded according to the time code and the content identifier. Alternatively, the download server 1209, the content server 1109, and the digital watermark server 1110 may be constructed as a single database server on the network.

The decryption units 1201 and 1202 have legally obtained the encryption key from the primary content creator 1100, i.e., from the copyright holder, and decrypts the encrypted content with the digital watermark and the modulation signal. The secondary content creator 1200 corresponds to, for example, a broadcast company for broadcasting the created content via terrestrial or satellite broadcast. The broadcast company is provided with the encryption key for decryption the content by settling a contract concerning the use of the content with the content creator.

The monitoring unit 1205 centrally manages the insertion code info to be embedded into the content for implementing copyright protection. The monitoring unit 1205 has settled a contract concerning the copyright protection with the secondary content creator 1200, and also operates in association with the primary content creator 1100 of the monitoring unit 1106 so as to obtain the insertion code info embedded by the primary content creator 1100. The monitoring unit 1205 may be the same entity as the monitoring unit 1106, or may be an external, independent (neutral or fair) entity.

For removing the digital watermark embedded in the content and writing a new digital watermark, the secondary content creator 1200 makes a request to the monitoring unit 1205. In response to this request, the monitoring unit 1205 supplies the insertion code info embedded in the content to the sign modulator 1204. The monitoring unit 1205 also issues insertion code info' to be used by the secondary content creator 1200 and registers it.

Upon receiving the current insertion code info from the monitoring unit 1205, the sign modulator 1204 encodes it by using the modulation information decrypted by the decryption unit 1202, thereby generating the digital watermark information iw which should be the same as the digital watermark information iw embedded into the content.

The removing unit 1203 subtracts the digital watermark information iw from the content decrypted by the decryption unit 1201. Thus, the digital watermark is removed.

As a result, the original content is reconstructed in the secondary content distributor 1200. If the third party obtains the original content, the copyright of the copyright holder, i.e., the content creator, and the profit model of the use of the content may be exposed to the danger of copyright infringement. In this embodiment, however, as shown in Fig. 5, the monitoring unit 1205 supplies the information concerning the digital watermark, such as the insertion code info, only to the sign modulator 1204 of the legal contractor, i.e., the content distributor 1200. It is thus possible to protect the content from illegal users who may attempt to remove the digital watermark. Moreover, the embedding modulation information is safely transferred from the primary content creator 1100 to the secondary content creator 1200 in the encrypted form, which prevents the third party from extracting the digital watermark signal in meaningful form. It is thus possible to protect the content from illegal use.

The editor 1206 of the secondary content creator 1200 is now able to edit the plaintext content without the digital watermark. For example, if the secondary content creator 1200 is a broadcast company which edits and distributes the content, it performs the editing operation according to a predetermined broadcast program schedule. The secondary content creator 1200 performs the editing operation by using the original content, thereby making it possible to maintain the S/N ratio of the content.

The content edited by the editor 1206 may be a secondary work of the original content, a collective work, a collaborate work, or a combined work formed of a combination of a plurality of contents. In this case, a different copyright from the original content is generated, and thus, new copyright information, i.e., new digital watermark information, must be written into the content.

When it is desired that the digital watermark information be rewritten by new information, the secondary content distributor 1200 makes a request to the monitoring unit 1205. In response to this request, the monitoring unit 1205 issues the new insertion code info', and supplies it to the sign modulator 1208 and also registers it in correspondence with the secondary content.

Upon receiving the insertion code info' from the monitoring unit 1205, the sign modulator 1208 encodes it according to the modulation information supplied from the decryption unit 1202 so as to generate the digital watermark information iw' to be embedded into the content.

The embedding unit 1207 combines the edited content from the editor 1206 and the encoded digital watermark information (synthesis processing) so as to rewrite the digital watermark. The digital watermark content created as described above is stored in the digital server 1210.

In the data processing system 1001 shown in Fig. 5, the digital watermark modulation signal is encrypted and is then safely transferred from the primary content creator 1100 to the secondary content creator 1200. It is not essential that the entire modulation information be transmitted. For example, if the modulation information is generated in accordance with the high frequency information in the primary content creator 1100, a large computation load is required for re-generating the entire modulation information in the secondary content creator 1200. However, the signal components embedded in accordance with the luminance value can easily be re-generated in the secondary content creator 1200. It is also possible to reduce the burden incurred by the transferring of the information or the burden of the server by skipping part of the modulation information. Alternatively, instead of the digital watermark itself, information indicating the selected pattern (basic pattern) used for embedding the digital watermark, or information for modulating or shifting the digital watermark may be transferred from the primary content creator 1100 to the secondary content creator 1200. Given with such information, the digital watermark can be sufficiently removed.

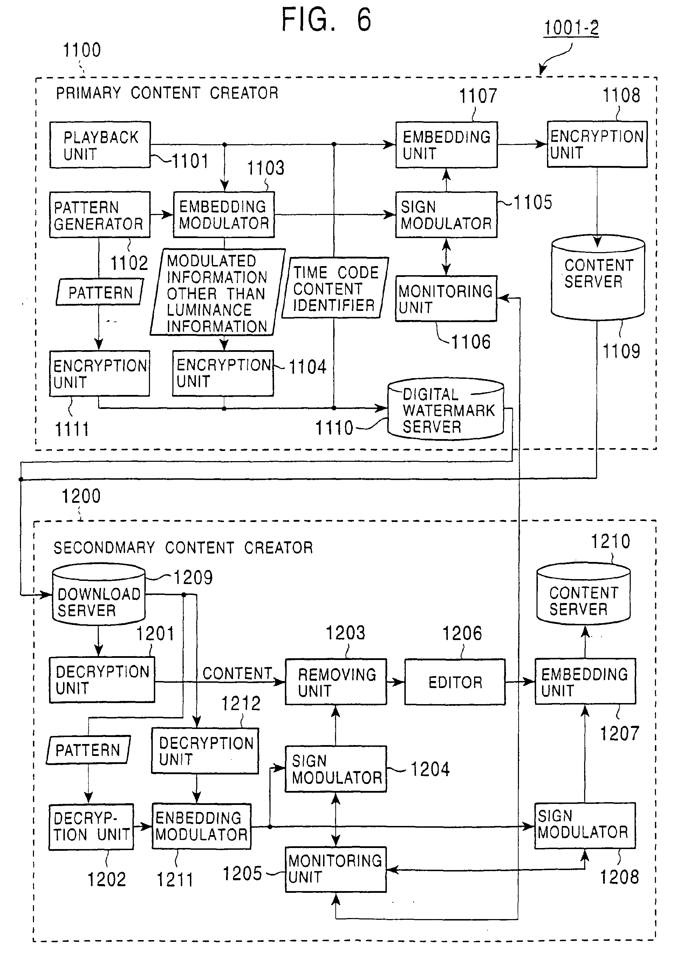

Fig. 6 is a schematic diagram illustrating a data processing system 1001-2, which is an example of a modification made to the data processing system 1001 shown in Fig. 5. The major difference between the data processing system 1001-2 and the data processing system 1001 is that the signal components of the modulation information according to the luminance value are re-generated in the secondary content creator 1200.

The data processing system 1001-2 is formed of, as shown in Fig. 6, a primary content creator 1100 for creating the primary content, such as a movie, a secondary content creator 1200 for creating the secondary content, such as the edited or processed content from the primary content.

The primary content creator 1100 embeds a digital watermark into the content so that the source of the content can be identified in case the content is illegally copied in a studio while, for example, a movie is being created. In contrast, in order to use (for example, broadcast) the content obtained from the primary content creator 1100, the secondary content creator 1200 removes the digital watermark embedded by the primary content creator 1100, and embeds a new digital watermark representing an identifier of a broadcast station or a time (broadcast time).

The primary content creator 1100 is formed of a playback unit 1101, a pattern generator 1102, an embedding modulator 1103, an encryption unit 1104, a sign modulator 1105, a monitoring unit 1106, an embedding unit 1107, an encryption unit 1108, a content server 1109, a digital watermark server 1110, and an encryption unit 1111.

The playback unit 1101 is, for example, a VCR or a disk recorder, and plays back the content, such as works of copyright holders, from recording media.

The pattern generator 1102 generates a pattern which is equivalent to a "digital watermark key". Generally, the pattern is expressed by two-dimensional information. The pattern generator 1102 selects a pattern which is less visible on the screen while observing the signal output from the playback unit 1101. The selected pattern or information indicating the selected pattern forms part of the digital watermark information. The pattern is then encrypted by the encryption unit 1111, and is stored in the digital watermark server 1110 in correspondence with the time code.

The embedding modulator 1103 modulates the pattern generated by the pattern generator 1102 for suitably embedding digital watermark information iw represented by the pattern into a host signal (video signal). For example, the embedding modulator 1103 first analyzes the complexity of the signal read by the playback unit 1101, and then modulates the pattern so that a larger amount of digital watermark information can be embedded into a signal component on which the visual or audible masking effect can be most effectively exerted. For example, a larger amount of digital watermark can be embedded into a higher frequency component of the host signal. The digital watermark can also be embedded into the host signal according to the luminance value.

The modulation information other than the information concerning the luminance is encrypted in the encryption unit 1104, and is stored in the digital watermark server 1110 in correspondence with the time code. The embedding modulation information forms part of the digital watermark information.

The content identifier is also encrypted and is stored in the digital watermark server 1110. The signal stored in a recording medium is also encrypted, though it is not shown, and it is decrypted in the primary content creator 1100.

The monitoring unit 1106 centrally manages the digital watermark information iw to be embedded into the content for implementing copyright protection. When embedding the digital watermark into the content, the primary content creator 1100 makes a request to the monitoring unit 1106. In response to this request, the monitoring unit 1106 issues the insertion code info, supplies it to the sign modulator 1105, and registers it. The monitoring unit 1106 operates in association with the monitoring unit 1205 of the secondary content creator 1200.

The insertion code info issued by the monitoring unit 1106 is input into the sign modulator 1105. The sign modulator 1105 encodes the insertion code info based on the modulation information supplied from the embedding modulator 1103, thereby generating the digital watermark information iw.

The embedding unit 1107 combines the playback signal from the playback unit 1101 and the encoded digital watermark information iw (synthesis processing) so as to generate the host signal with the embedded digital watermark.

The host signal created as discussed above, i.e., the content, is encrypted in the encryption unit 1108, and is stored in the content server 1109.

The secondary content creator 1200 is formed of decryption units 1201 and 1202, a removing unit 1203, a sign modulator 1204, a monitoring unit 1205, an editor 1206, an embedding unit 1207, a sign modulator 1208, a download server 1209, a content server 1210, an embedding modulator 1211, and a decryption unit 1212.

The download server 1209 is connected to the content server 1109 and the digital watermark server 1110 of the primary content creator 1100 via a network. The encrypted content with the embedded digital watermark, the digital watermark information, and the associated information stored in the content server 1109 and the digital watermark server 1110 are downloaded according to the time code and the content identifier.

The decryption units 1201, 1202, and 1212 have legally obtained the encryption key from the primary content creator 1100, i.e., from the copyright holder, and decrypt the encrypted content with the digital watermark, the pattern selected in the pattern generator 1102, and the modulation information other than the information concerning the luminance.

The embedding modulator 1211 generates the modulation information embedded according to the luminance value based on the pattern and the modulation information reconstructed in the decryption units 1202 and 1212, respectively.

The monitoring unit 1205 centrally manages the insertion code info to be embedded into the content for implementing copyright protection. The monitoring unit 1205 has settled a contract concerning copyright protection with the secondary content creator 1200, and also operates in association with the primary content creator 1100 of the monitoring unit 1106 so as to obtain the insertion code info embedded by the primary content creator 1100.

For removing the digital watermark embedded in the content and writing a new digital watermark, the secondary content creator 1200 makes a request to the monitoring unit 1205. In response to this request, the monitoring unit 1205 supplies the insertion code info embedded in the content to the sign modulator 1204. The monitoring unit 1205 also issues insertion code info' to be used by the secondary content creator 1200 and registers it in correspondence with the content identification information.

Upon receiving the current insertion code info from the monitoring unit 1205, the sign modulator 1204 encodes it by using the modulation information decrypted by the decryption unit 1202, thereby generating the digital watermark information iw which should be the same as the digital watermark information iw embedded into the content.

The removing unit 1203 subtracts the digital watermark information iw from the content decrypted by the decryption unit 1201. Thus, the digital watermark is removed.

As a result, the original content is reconstructed in the secondary content distributor 1200. In this embodiment, as shown in Fig. 6, the monitoring unit 1205 supplies the information concerning the digital watermark, such as the insertion code info, only to the sign modulator 1204 of the legal contractor, i.e., the content distributor 1200. It is thus possible to protect the content from illegal users who may attempt to remove the digital watermark. Moreover, the embedding modulation information is safely transferred from the primary content creator 1100 to the secondary content creator 1200 in the encrypted form, which prevents the third party from extracting the digital watermark signal in meaningful form. It is thus possible to protect the content from illegal use.

The editor 1206 of the secondary content creator 1200 is now able to edit the plaintext content without the digital watermark. For example, if the secondary content creator 1200 is a broadcast company which edits and distributes the content, it performs the editing operation according to a predetermined broadcast program schedule. The secondary content creator 1200 performs the editing operation by using the original content, thereby maintaining the S/N ratio of the content.

The content edited by the editor 1206 may be a secondary work of the original content, a collective work, a collaborate work, or a combined work formed of a combination of a plurality of contents. In this case, a different copyright from the original content is generated, and thus, new copyright information, i.e., new digital watermark information, must be written into the content.

When it is desired that the digital watermark information be rewritten by new information, the secondary content distributor 1200 makes a request to the monitoring unit 1205. In response to this request, the monitoring unit 1205 issues the new insertion code info', and supplies it to the sign modulator 1208 and also registers it in correspondence with the content identification information.

Upon receiving the insertion code info' from the monitoring unit 1205, the sign modulator 1208 encodes it according to the modulation information supplied from the decryption unit 1202 so as to generate the digital watermark information iw' to be embedded into the content.

The embedding unit 1207 combines the edited content output from the editor 1206 and the encoded digital watermark information (synthesis processing) so as to rewrite the digital watermark. The digital watermark content created as described above is stored in the digital server 1210.

The process for inserting and rewriting digital watermarks by the data processing system 1001 is described below.

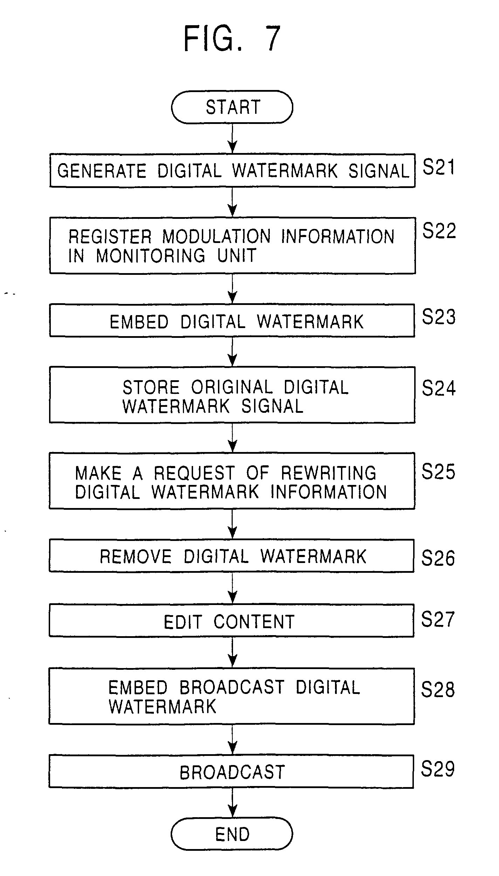

Fig. 7 is a flow chart illustrating the process for inserting and rewriting digital watermarks in the data processing system 1001. Steps S21 through S24 are performed by the primary content creator 1100, while steps S25 through S29 are performed by the secondary content creator 1200. The processing for inserting and rewriting the digital watermarks is discussed below with reference to the flow chart of Fig. 7.

In step S21, the primary content creator 1100 creates a digital watermark signal according to the content.

Generally, adjustments are made to the signal components of a digital watermark according to the complexity of the signal so that the visual masking effect for the image content or the audio masking effect for the audio content can be most effectively exerted. For example, a larger amount of digital watermark can be embedded into a higher frequency signal component, and a larger amount of digital watermark can be embedded into a signal component which sharply fluctuates over time.

Then, in step S22, the embedding modulator 1103 modulates the pattern generated by the pattern generator 1102 so that the digital watermark information iw represented by the pattern is suitably embedded into the host signal (video signal). The modulation information is encrypted in the encryption unit 1104, and is then stored in the digital watermark server 1110 in correspondence with the time code.

In step S23, the primary content creator 1100 communicates with the monitoring unit 1105 so as to obtain the code for identifying the unique content (or unique copyright holder), i.e., the insertion code info. The sign modulator 1105 then encodes the insertion code info based on the modulation information supplied from the embedding modulator 1103, thereby generating the digital watermark information iw. The embedding unit 1107 combines the playback signal from the playback unit 1101 and the encoded digital watermark information iw (synthesis processing), thereby generating the host signal.

In step S24, the original digital watermark signal is stored in the digital watermark server 1110.

Subsequently, in step S25, when it is desired that the digital watermark embedded in the content be removed and rewritten, the secondary content creator 1200 makes a request to the monitoring unit 1205. In response to this request, the monitoring unit 1205 supplies the insertion code info embedded in the content to the sign modulator 1204 of the secondary content creator 1200.

In step S26, the sign modulator 1204 receives the current insertion code info from the monitoring unit 1205, and encodes it according to the modulation information decrypted in the decryption unit 1202, thereby generating the digital watermark information iw which should be the same as that embedded in the content. Subsequently, the removing unit 1203 subtracts the digital watermark information iw from the content reconstructed by the decryption unit 1201. The digital watermark is thus removed.

As a result, the original content is reconstructed in the secondary content creator 1200. In step S27, the editor 1206 of the secondary content creator 1200 is now able to edit the plaintext content without the digital watermark. For example, if the secondary content creator 1200 is a broadcast company which edits and distributes the content, it performs the editing operation according to a predetermined broadcast program schedule. The secondary content creator 1200 performs the editing operation by using the original content, thereby maintaining the S/N ratio of the content.

The content edited by the editor 1206 may be a secondary work of the original content, a collective work, a collaborate work, or a combined work formed of a combination of a plurality of contents. In this case, a different copyright from the original content is generated, and thus, new copyright information, i.e., new digital watermark information, must be written into the content.

When it is desired that the digital watermark information be rewritten by new information, the secondary content distributor 1200 makes a request to the monitoring unit 1205. In response to this request, the monitoring unit 1205 issues the new insertion code info', and supplies it to the sign modulator 1208 and also registers it.

In step S28, upon receiving the insertion code info' from the monitoring unit 1205, the sign modulator 1208 encodes it according to the modulation information supplied from the decryption unit 1202 so as to generate the digital watermark information iw' to be embedded into the content. The embedding unit 1207 then combines the edited content from the editor 1206 and the encoded digital watermark information (synthesis processing) so as to rewrite the digital watermark.

Then, in step S29, the digital watermark content is stored in the content server 1210, and is distributed via terrestrial or satellite broadcast at a predetermined broadcast time.

While the present invention has been described with reference to what are presently considered to be the preferred embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

Various further aspects and features are defined in the appended claims. Combinations of features from the dependent claims may be combined with features of the independent claims as appropriate and not merely as explicitly set out in the claims.

## Claims

1. An information embedding apparatus for embedding additional information into a content as a digital watermark; comprising:
(a) a generator for generating the digital watermark representing the additional information;
(b) an embedding unit for embedding the digital watermark into the content;
(c) a transmitter for transmitting the content provided with the embedded digital watermark; and
(d) a transmitter for transmitting the digital watermark or information for reconstructing the digital watermark.

2. An information embedding apparatus according to claim 1, wherein the additional information comprises at least one of identification information and copyright information concerning the content.

3. An information embedding apparatus according to claim 1, wherein:
said generator (a) comprises means for generating a key pattern used for indicating the additional information as the digital watermark, and means for generating the digital watermark by using the key pattern; and
said transmitter (d) transmits the key pattern as the information for reconstructing the digital watermark.

4. An information embedding apparatus according to claim 1, wherein:
said generator (a) comprises means for generating a key pattern used for indicating the additional information as the digital watermark, means for modulating the key pattern according to the complexity of the content, and means for generating the digital watermark by using the modulated key pattern; and
said transmitter (d) transmits the modulated key pattern as the information for reconstructing the digital watermark.

5. An information embedding apparatus according to claim 1, wherein said transmitters (c) and (d) multiplex the content provided with the embedded digital watermark with the information for reconstructing the digital watermark.

6. An information embedding apparatus according to claim 1, wherein said transmitters (c) and (d) comprise means for multiplexing the content provided with the embedded digital watermark with the information for reconstructing the digital watermark, and means for encrypting the multiplexed content.

7. An information embedding method for embedding additional information into a content as a digital watermark, comprising:
(a) a generating step of generating the digital watermark representing the additional information;
(b) an embedding step of embedding the digital watermark into the content;
(c) a transmitting step of transmitting the content provided with the embedded digital watermark; and
(d) a transmitting step of transmitting the digital watermark or information for reconstructing the digital watermark.

8. An information embedding method according to claim 7, wherein the additional information comprises at least one of identification information and copyright information concerning the content.

9. An information embedding method according to claim 7, wherein:
said generating step (a) comprises a sub-step of generating a key pattern used for indicating the additional information as the digital watermark, and a sub-step of generating the digital watermark by using the key pattern; and
said transmitting step (d) comprises a sub-step of transmitting the key pattern as the information for reconstructing the digital watermark.

10. An information embedding method according to claim 7, wherein:
said generating step (a) comprises a sub-step of generating a key pattern used for indicating the additional information as the digital watermark, a sub-step of modulating the key pattern according to the complexity of the content, and a sub-step of generating the digital watermark by using the modulated key pattern; and
said transmitting step (d) transmits the modulated key pattern as the information for reconstructing the digital watermark.

11. An information embedding method according to claim 7, wherein said transmitting steps (c) and (d) multiplex the content provided with the embedded digital watermark with the information for reconstructing the digital watermark.

12. An information embedding method according to claim 7, wherein said transmitting steps (c) and (d) comprise a sub-step of multiplexing the content provided with the embedded digital watermark with the information for reconstructing the digital watermark, and a sub-step of encrypting the multiplexed content.

13. An information processing apparatus for processing a content in which additional information is embedded as a digital watermark, comprising:
(a) an acquiring unit for acquiring the content provided with the embedded digital watermark;
(b) an acquiring unit for acquiring the digital watermark or information for reconstructing the digital watermark; and
(c) a removing unit for removing the digital watermark from the content by using the acquired digital watermark or the information for reconstructing the digital watermark.

14. An information processing apparatus according to claim 13, wherein the additional information comprises at least one of identification information and copyright information concerning the content.

15. An information processing apparatus according to claim 13, wherein the content provided with the embedded digital watermark acquired by said acquiring unit (a) is encrypted, said information processing apparatus further comprising decryption means for decrypting the encrypted content.

16. An information processing apparatus according to claim 13, wherein said acquiring units (a) and (b) acquire multiplexed data consisting of the content provided with the embedded digital watermark and the digital watermark or the information for reconstructing the digital watermark, said information processing apparatus further comprising separation means for separating the multiplexed data into the content and the digital watermark or the information for reconstructing the digital watermark.

17. An information processing apparatus according to claim 13, wherein:
said acquiring unit (b) acquires, as the information for reconstructing the digital watermark, a key pattern used for indicating the additional information as the digital watermark; and
said removing unit (c) comprises means for acquiring the additional information, means for generating the digital watermark by using the key pattern, and means for subtracting the digital watermark from the content.

18. An information processing apparatus according to claim 13, further comprising an embedding unit for embedding another digital watermark into the content from which the previous digital watermark is removed by said removing unit (c).

19. An information processing apparatus according to claim 13, further comprising authentication processing means for performing predetermined authentication processing before said acquiring unit (b) acquires the digital watermark or the information for reconstructing the digital watermark.

20. An information processing apparatus according to claim 13, wherein:
the digital watermark or the information for reconstructing the digital information acquired by said acquiring unit (b) is encrypted; and
said removing unit (c) removes the digital watermark from the content after decrypting the digital watermark or the information for reconstructing the digital watermark.

21. An information processing apparatus according to claim 13, wherein said acquiring unit (b) acquires the digital watermark or the information for reconstructing the digital watermark based on content identification information unique to the content provided with the embedded digital watermark.

22. An information processing apparatus according to claim 13, wherein the information for reconstructing the digital watermark comprises at least one of information indicating a basic pattern selected for embedding the digital watermark, modification information, and shifting information.

23. An information processing apparatus according to claim 13, wherein:
said acquiring unit (b) receives information indicating a modulation amount based on characteristics of the content as the information for reconstructing the digital watermark; and
said removing unit (c) reconstructs the digital watermark by encoding the additional information according to the information indicating the modulation amount so as to remove the digital watermark from the content.

24. An information processing method for processing a content in which additional information is embedded as a digital watermark, comprising:
(a) an acquiring step of acquiring the content provided with the embedded digital watermark;
(b) an acquiring step of acquiring the digital watermark or information for reconstructing the digital watermark; and
(c) a removing step of removing the digital watermark from the content by using the acquired digital watermark or the acquired information for reconstructing the digital watermark.

25. An information processing method according to claim 24, wherein the additional information comprises at least one of identification information and copyright information concerning the content.

26. An information processing method according to claim 24, wherein the content provided with the embedded digital watermark acquired in said acquiring step (a) is encrypted, said information processing method further comprising a decrypting step of decrypting the encrypted content.

27. An information processing method according to claim 24, wherein said acquiring steps (a) and (b) acquire multiplexed data consisting of the content provided with the embedded digital watermark and the digital watermark or the information for reconstructing the digital watermark, said information processing method further comprising a separating step of separating the multiplexed data into the content and the digital watermark or the information for reconstructing the digital watermark.

28. An information processing method according to claim 24, wherein:
said acquiring step (b) acquires, as the information for reconstructing the digital watermark, a key pattern used for indicating the additional information as the digital watermark; and
said removing step (c) comprises a sub-step of acquiring the additional information, a sub-step of generating the digital watermark by using the key pattern, and a sub-step of subtracting the digital watermark from the content.

29. An information processing method according to claim 24, further comprising an embedding step of embedding another digital watermark into the content from which the previous digital watermark is removed by said removing step (c).

30. An information processing method according to claim 24, further comprising an authentication processing step of performing predetermined authentication processing before said acquiring step (b) acquires the digital watermark or the information for reconstructing the digital watermark.

31. An information processing method according to claim 24, wherein:
the digital watermark or the information for reconstructing the digital information acquired in said acquiring step (b) is encrypted; and
said removing step (c) removes the digital watermark from the content after decrypting the digital watermark or the information for reconstructing the digital watermark.

32. An information processing method according to claim 24, wherein said acquiring step (b) acquires the digital watermark or the information for reconstructing the digital watermark based on content identification information unique to the content provided with the embedded digital watermark.

33. An information processing method according to claim 24, wherein the information for reconstructing the digital watermark comprises at least one of information indicating a basic pattern selected for embedding the digital watermark, modification information, and shifting information.

34. An information processing method according to claim 24, wherein:
said acquiring step (b) receives information indicating a modulation amount based on characteristics of the content as the information for reconstructing the digital watermark; and
said removing step (c) reconstructs the digital watermark by encoding the additional information according to the information indicating the modulation amount so as to remove the digital watermark from the content.

35. An information processing apparatus for managing digital watermark information to be embedded into a content, wherein at least part of the digital watermark information is managed in correspondence with the content into which the digital watermark information is to be embedded.

36. An information processing apparatus according to claim 35, wherein at least part of the digital watermark information is managed in encrypted form.

37. An information processing apparatus according to claim 35, wherein at least part of the digital watermark information is managed in relation to the content into which the digital watermark information is to be embedded and to unique time information.

38. An information processing apparatus according to claim 35, wherein at least part of the corresponding digital watermark information is supplied to an external device based on content identification information after authentication is performed with said external device.

39. An information processing apparatus according to claim 35, wherein the digital watermark information is generated by modulating a basic pattern used for indicating information to be embedded as a digital watermark according to characteristics of the content, and by encoding the information to be embedded according to an amount by which the basic pattern is modulated, and the modulation amount is managed as part of the digital watermark information.

40. An information processing apparatus according to claim 35, wherein part of the digital watermark information comprises at least one of information indicating a basic pattern selected for embedding the digital watermark, modulation information, and shifting information.

41. An information processing method for managing digital watermark information to be embedded into a content, wherein at least part of the digital watermark information is managed in correspondence with the content into which the digital watermark information is to be embedded.

42. An information processing method according to claim 41, wherein at least part of the digital watermark information is managed in encrypted form.

43. An information processing method according to claim 41, wherein at least part of the digital watermark information is managed in relation to the content into which the digital watermark information is to be embedded and to unique time information.

44. An information processing method according to claim 41, wherein at least part of the corresponding digital watermark information is supplied to an external device based on content identification information after authentication is performed with said external device.

45. An information processing method according to claim 41, wherein the digital watermark information is generated by modulating a basic pattern used for indicating information to be embedded as a digital watermark according to characteristics of the content and by encoding the information to be embedded according to an amount by which the basic pattern is modulated, and the modulation amount is managed as part of the digital watermark information.

46. An information processing method according to claim 41, wherein part of the digital watermark information comprises at least one of information indicating a basic pattern selected for embedding the digital watermark, modulation information, and shifting information.

47. A content processing apparatus for performing processing concerning embedding of digital watermark into a content, comprising:
an embedding unit for embedding the digital watermark into the content, said embedding unit comprising:
(a) means for generating the digital watermark;
(b) means for embedding the digital watermark into the content;
(c) means for transmitting the content provided with the embedded digital watermark; and
(d) means for transmitting the digital watermark or information for reconstructing the digital watermark; and
a removing unit for removing the digital watermark from the content, said removing unit comprising:
(e) means for acquiring the content provided with the embedded digital watermark;
(f) means for acquiring the digital watermark or the information for reconstructing the digital watermark; and
(g) means for removing the digital watermark from the content by using the acquired digital watermark or the acquired information for reconstructing the digital watermark.

48. A content processing apparatus according to claim 47, wherein said removing unit further comprises means for embedding a second digital watermark into the content from which the previous digital watermark is removed by said means (g).

49. A content processing apparatus according to claim 47, wherein said removing unit further comprises means for embedding a second digital watermark into the content from which the previous digital watermark is removed by said means (g), and means for distributing the content into which the second digital watermark is embedded.

50. A content processing method for performing processing concerning embedding of a digital watermark into a content, comprising:
an embedding step of embedding the digital watermark into the content, said embedding step comprising:
(a) a sub-step of generating the digital watermark;
(b) a sub-step of embedding the digital watermark into the content;
(c) a sub-step of transmitting the content provided with the embedded digital watermark; and
(d) a sub-step of transmitting the digital watermark or information for reconstructing the digital watermark; and
a removing step of removing the digital watermark from the content, said removing step comprising:
(e) a sub-step of acquiring the content provided with the embedded digital watermark;
(f) a sub-step of acquiring the digital watermark or the information for reconstructing the digital watermark; and
(g) a sub-step of removing the digital watermark from the content by using the acquired digital watermark or the acquired information for reconstructing the digital watermark.

51. A content processing method according to claim 50, wherein said removing step further comprises a sub-step of embedding a second digital watermark into the content from which the previous digital watermark is removed by said substep (g).

52. A content processing method according to claim 50, wherein said removing step further comprises a sub-step of embedding a second digital watermark into the content from which the previous digital watermark is removed by said sub-step (g), and a sub-step of distributing the content into which the second digital watermark is embedded.

53. A monitoring apparatus for managing additional information to be embedded into a content as a digital watermark, comprising:
(a) means for issuing and supplying the additional information in response to a registration request of the content, and for managing the additional information in correspondence with the content; and
(b) means for supplying the corresponding additional information of the content in response to a rewriting request of the additional information.

54. A monitoring apparatus according to claim 53, further comprising means for acquiring the digital watermark representing the additional information or information for reconstructing the digital watermark, wherein said means (b) supplies the digital watermark or the information for reconstructing the digital watermark in response to the rewriting request of the additional information.

55. A monitoring method for managing additional information to be embedded into a content as a digital watermark, comprising:
(a) a step of issuing and supplying the additional information in response to a registration request of the content, and of managing the additional information in correspondence with the content; and
(b) a step of supplying the corresponding additional information of the content in response to a rewriting request of the additional information.

56. A monitoring method according to claim 55, further comprising a step of acquiring the digital watermark representing the additional information or information for reconstructing the digital watermark, wherein said step (b) supplies the digital watermark or the information for reconstructing the digital watermark in response to the rewriting request of the additional information.

57. A storage medium for physically storing a computer-readable software program which executes, on a computer system, processing for embedding additional information into a content as a digital watermark, said computer-readable software program comprising:
(a) a step of generating the digital watermark representing the additional information;
(b) a step of embedding the digital watermark into the content;
(c) a step of transmitting the content provided with the embedded digital watermark; and
(d) a step of transmitting the digital watermark or information for reconstructing the digital watermark.

58. A storage medium for physically storing a computer-readable software program which executes, on a computer system, processing on a content into which additional information is embedded as a digital watermark, said computer-readable software program comprising:
(a) a step of acquiring the content provided with the embedded digital watermark;
(b) a step of acquiring the digital watermark or information for reconstructing the digital watermark; and
(c) a step of removing the digital watermark from the content by using the acquired digital watermark or the acquired information for reconstructing the digital watermark.

59. A storage medium for physically storing a computer-readable software program which executes management of digital watermark information to be embedded into a content on a computer system, said computer-readable software program comprising a step of managing at least part of the digital watermark information in correspondence with the content into which the digital watermark information is to be embedded.

60. A storage medium for physically storing a computer-readable software program which executes processing concerning embedding of a digital watermark into a content on a computer system, said computer-readable software program comprising:
an embedding step of embedding the digital watermark into the content, said embedding step comprising:
(a) a sub-step of generating the digital watermark;
(b) a sub-step of embedding the digital watermark into the content;
(c) a sub-step of transmitting the content provided with the embedded digital watermark; and
(d) a sub-step of transmitting the digital watermark or information for reconstructing the digital watermark; and
a removing step of removing the digital watermark from the content, said removing step comprising:
(e) a sub-step of acquiring the content provided with the embedded digital watermark;
(f) a sub-step of acquiring the digital watermark or the information for reconstructing the digital watermark; and
(g) a sub-step of removing the digital watermark from the content by using the acquired digital watermark or the acquired information for reconstructing the digital watermark.

61. A storage medium for physically storing a computer-readable software program which executes monitoring processing for managing additional information to be embedded into a content as a digital watermark on a computer system, said computer-readable software program comprising:
(a) a step of issuing and supplying the additional information in response to a registration request of the content, and of managing the additional information in correspondence with the content; and
(b) a step of supplying the corresponding additional information of the content in response to a rewriting request of the additional information.
